(19) Europäisches Patentamt
European Patent Office
Office européen des brevets

(11) **EP 4 783 097 A1**

(12) **EUROPEAN PATENT APPLICATION**

(43) Date of publication:
**29.07.2026 Bulletin 2026/31**

(21) Application number: **26153612.2**

(22) Date of filing: **22.01.2026**

(51) International Patent Classification (IPC):
***G06Q 20/40*** *(2012.01)*

(52) Cooperative Patent Classification (CPC):
**G06Q 20/4016**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **27.01.2025 US 202519037671**

(71) Applicant: **Visa International Service Association**
**San Francisco, California 94128 (US)**

(72) Inventors:
• **HARRIS, Jonathan Golden**
**Potomac, MD, 20854-3313 (US)**
• **XU, Hang**
**Gaithersburg, MD, 20878-2327 (US)**
• **JABER, Ahmed**
**Vienna, VA, 22180 (US)**

(74) Representative: **EIP**
**Fairfax House**
**15 Fulwood Place**
**London WC1V 6HU (GB)**

(54) **MULE-BASED FRAUD IDENTIFICATION SYSTEM AND METHOD THEREFOR**

(57)  A computer-implemented method, includes receiving, at a payment processor, an indication that a fraudulent transaction has occurred, the fraudulent transaction being associated with a fraudulent transaction account; performing, at the payment processor, a mule account assessment of financial transactions originating from an account that received the fraudulent transaction; utilizing the mule account assessment to identify whether the account that received the fraudulent transaction is a mule account; generating, at the payment processor, a mule account indicator indicative of the account that received the fraudulent transaction being identified as the mule account; and utilizing the mule account assessment to identify mule-adjacent accounts associated with the mule account, the identification of the mule-adjacent accounts being utilized to prevent mule-based fraud associated with the mule account.

FIG. 3

EP 4 783 097 A1

## Description

BACKGROUND

In many payment systems, the mere identification of fraudulent payment transactions does not prevent fraudulent payment transactions from occurring in a payment transaction network, especially for fraudulent payment transactions that occur after an initial fraudulent payment transaction. As such, identifying fraudulent payment transactions is important for the development of predictive models designed to prevent fraudulent payment transactions. Predictive modeling of fraudulent payment transactions in payment networks allows artificial intelligence models to, for example, predict fraudulent payment transactions and the behavior of nefarious actors seeking to monetize fraudulent conduct. The ability to prevent fraudulent payment transactions allows financial institutions to save billions of dollars. Thus, a need exists to provide systems that prevent fraudulent payment transactions from occurring and improve security and reliability as part of a payment process.

BRIEF DESCRIPTION OF THE DRAWINGS

FIG. 1 illustrates a block diagram of a system in accordance with some embodiments.
FIG. 2 illustrates a block diagram of a mule-based fraud identification and prevention system in accordance with some embodiments.
FIG. 3 is a flow diagram illustrating a mule-based fraud identification and prevention method in accordance with some embodiments.
FIG. 4 illustrates a block diagram of a mule identification transaction graph in accordance with some embodiments.
FIG. 5 illustrates an account-to-account (A2A) payment transaction network 500 in accordance with some embodiments.

DETAILED DESCRIPTION

The following terms are described herein.
In some embodiments, a payment network, such as, for example, Visa International Service Association (VISA®), is a system that facilitates the routing, authorization, clearing, and settlement of electronic transactions (e.g., electronic payment transactions) between financial institutions, merchants, account holders, and cardholders, utilizing mule-based fraud identification system 150, as described further herein.
In some embodiments, a payment transaction network is a financial network that is configured to enable standardized routing, authorization, clearing, and settlement of electronic payment transactions. In some embodiments, payment transaction network includes, for example, an issuer, an acquirer, a merchant, a cardholder, and a payment processing network, that are configured to enable standardized routing, authorization, clearing, and settlement of electronic payment transactions.
In some embodiments, an electronic transaction or "transaction" is a financial transaction that occurs in a payment transaction network. Examples of electronic transactions include electronically receiving and making payments, depositing funds, transferring funds, withdrawing funds, and conducting credit and bank card transactions. In some embodiments, "transaction" and "financial transaction" and "electronic payment transaction" may be used to interchangeably to indicate a transaction.
In some embodiments, an account is a financial account held at a financial institution that is configured to allow account holders of the account to conduct financial transactions, such as, for example, receiving and making payments, depositing funds, transferring funds, withdrawing funds, and conducting credit and bank card transactions. In some embodiments, an account may be, a bank account, a savings account, a credit card account, or any other financial account capable of being utilized for financial transactions.
In some embodiments, a fraudulent transaction account is an account, such as, for example, a bank account or other financial account, of which a fraudulent transaction or fraudulent financial transaction originates.
In some embodiments, an account holder is an individual or entity that has been granted rights to access, manage, or perform transactions within an account, typically as recognized by the financial institution maintaining the account. In some embodiments, an account holder may be, for example, a victim or non-victim of the fraudulent transaction. In some embodiments, a victim is a person or entity that is unknowingly a party to a fraudulent transaction. In some embodiments, a non-victim is a person or entity that is knowingly a participant of a fraudulent transaction.
In some embodiments, an account-to-account (A2A) payment transaction network is a transaction network that facilitates the electronic transfer of funds directly between an originator financial institution and a beneficiary financial institution through a clearing house that validates, routes, clears, and settles payment instructions in compliance with predefined protocols and standards.
In some embodiments, an originator financial institution is a financial institution that is responsible for initiating an electronic payment transaction or instruction on behalf of a sender or originator, ensuring the debit of funds from a sender's account, and transmitting the transaction details to a clearing house for validation, routing, and settlement with a beneficiary financial institution.
In some embodiments, a sender or originator refers to an individual or entity that owns an account from which a payment transaction is being initiated. In some embodiments, the person or entity instructs the financial institution (e.g., originator financial institution) to execute the payment transaction. In some embodiments, the sender or originator is typically an account holder or payer, while the originator financial institution acts on behalf of the sender or originator to process and initiate the payment transaction through an A2A payment transaction network.

In some embodiments, a beneficiary is an individual or entity that owns an account or accounts at a beneficiary institution that receives funds transferred from a sender's account via a financial transaction, with the funds being deposited into the account/s of the beneficiary at the beneficiary financial institution.

In some embodiments, a clearing house is an institution or entity that is an intermediary responsible for validating payment instructions, reconciling transaction data between the originator and beneficiary financial institutions, and facilitating the routing and settlement of funds through a standardized process. Examples of clearing houses include entities such as ACH Automated Clearing House (ACH) in the United States or Cámara de Compensación Electrónica de Low Value S.A (COELSA) in Argentina.

In some embodiments, a beneficiary financial institution is a financial entity that is responsible for receiving and crediting funds to an account of a beneficiary after, for example, a payment transaction has been processed through a clearing house and validated by participating entities.

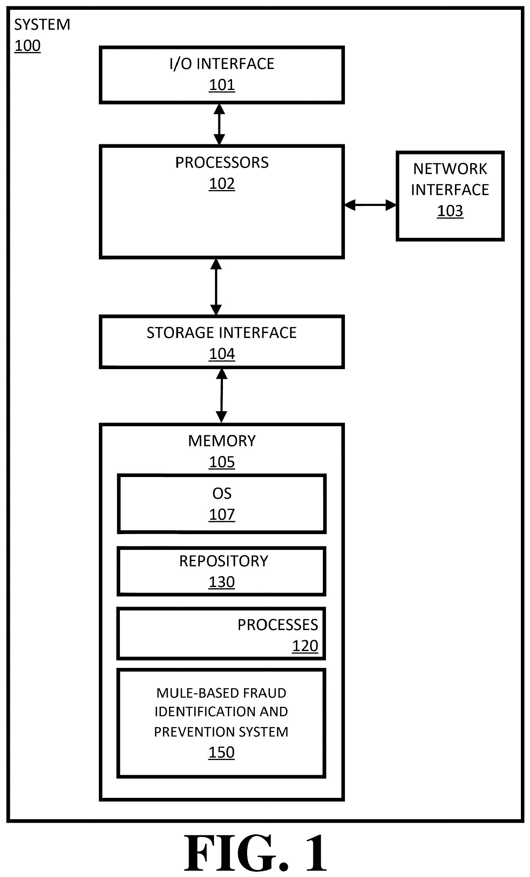

FIG. 1 illustrates a block diagram of an exemplary system 100 for implementing embodiments consistent with the present disclosure. In some nonlimiting embodiments or aspects, system 100 may utilize a mule-based fraud identification and prevention system 150 to identify and prevent mule-based fraud associated with a mule account identified by mule-based fraud identification and prevention system 150. In some embodiments, system 100 may be, for example, a payment network that includes mule-based fraud identification and prevention system 150. In some embodiments, in order to prevent mule-based fraud from occurring, system 100 may utilize mule-based fraud identification and prevention system 150 to identify a mule account and a mule-adjacent account/s in a payment network and prevent mule-based fraudulent transactions (e.g., fraudulent payment transactions, etc.) from occurring that are associated with the mule account and the mule-adjacent accounts, as described further in detail herein.

In some embodiments, the processor/s 102 may comprise at least one data processor for executing program components for dynamic resource allocation at run time. The processors 102 may include specialized processing units such as integrated system (bus) controllers, memory management control units, floating point units, graphics processing units, digital signal processing units, etc.

In some embodiments, the processors 102 may be disposed in communication with one or more input/output (I/O) devices (not shown) via an I/O interface 101. The I/O interface 101 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.1 n /b/g/n/x, Bluetooth®, cellular (e.g., code-division multiple access (CDMA), high-speed packet access (HSPA+), global system for mobile communications (GSM), long-term evolution (LTE), WiMax®, or the like), etc.

In some embodiments, using the I/O interface 101, the system 100 may communicate with one or more I/O devices. For example, an input device may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. An output device may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

In some embodiments, the processors 102 may be disposed in communication with a communication network via a network interface 103. The network interface 103 may communicate with the communication network. The network interface 103 may employ connection protocols including, without limitation, direct connect, Ethernet (e.g., twisted pair 10/100/1000 Base T), transmission control protocol/Internet protocol (TCP/IP), token ring, IEEE 802.11a/b/g/n/x, etc. The communication network may include, without limitation, a direct interconnection, e-commerce network, a peer to peer (P2P) network, local area network (LAN), wide area network (WAN), wireless network (e.g., using Wireless Application Protocol), the internet, Wi-Fi®, etc. Using the network interface 103 and the communication network, the system 100 may communicate with the one or more service operators or other computers.

In some non-limiting embodiments or aspects, the processors 102 may be disposed in communication with a memory 105 (e.g., RAM, ROM, etc.) via a storage interface 104. In some embodiments, the storage interface 104 may connect to memory 105 including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems interface (SCSI), etc. The memory drives may further include a drum, magnetic disc drive, magneto-optical drive, optical drive, Redundant Array of Independent Discs (RAID), solid-state memory devices, solid- state drives, etc.

In some embodiments, memory 105 may store a collection of program or database components, including, without limitation, a user interface, an operating system 107, a data repository 130, a web server, processes 120, mule-based fraud identification and prevention system 150, etc., described further in detail herein. In some non-limiting embodiments or aspects, the system 100 may store user/application data, such as the data, variables, records, customer data, account data, mule account data, mule-adjacent account data, etc. Such databases may be implemented as fault-tolerant, relational, scalable, secure databases such as Oracle or Sybase and/or a non-relational base, such as NoSQL.

In some embodiments, the operating system 107 may facilitate resource management and operation of the system 100. Examples of operating systems include, without limitation, APPLE® MACINTOSH® OS X®, UNIX®, UNIX-like system distributions (E.G., BERKELEY SOFTWARE DISTRIBUTION® (BSD), FREEBSD®, NETBSD®, OPENBSD, etc.), LINUX® DISTRIBUTIONS (E.G., RED HAT®, UBUNTU®, KUBUNTU®, etc.), IBM®OS/2®, MICROSOFT® WINDOWS® (XP®, VISTA®/7/8, 10 etc.), APPLE® OS®, GOOGLE™ ANDROID™, or the like.

In some non-limiting embodiments or aspects, the system 100 may implement a web browser (not shown in the figures) stored program component. The web browser (not shown in the figures) may be a hypertext viewing application, such as MICROSOFT® INTERNET EXPLORER®, GOOGLE™ CHROME™, MOZILLA® FIREFOX®, APPLE® SAFARI®, etc. Secure web browsing may be provided using Secure Hypertext Transport Protocol (HTTPS), Secure Sockets Layer (SSL), Transport Layer Security (TLS), etc. Web browsers may utilize facilities such as AJAX, DHTML, ADOBE® FLASH®, JAVASCRIPT®, JAVA®, Application Programming Interfaces (APIs), etc.

Furthermore, one or more computer-readable storage media may be utilized in implementing embodiments consistent with the present disclosure. In some embodiments, a computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, e.g., non-transitory. Examples include Random Access Memory (RAM), Read-Only Memory (ROM), volatile memory, non-volatile memory, hard drives, Compact Disc (CD) ROMs, Digital Video Disc (DVDs), flash drives, disks, and any other known physical storage media.

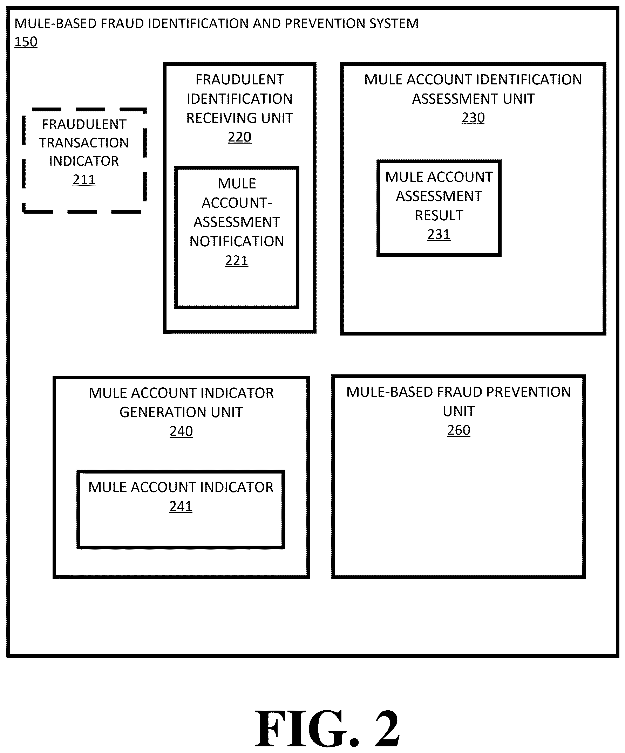

FIG. 2 illustrates a block diagram of a mule-based fraud identification and prevention system 150 in accordance with some embodiments. In some embodiments, the mule-based fraud identification and prevention system 150 is executable code and/or equivalent hardware configured to identify a mule account and a mule-adjacent account in a payment transaction network and prevent mule-based fraudulent transactions from occurring. In some embodiments, mule-based fraudulent transactions are financial transactions associated with a mule account and/or a mule-adjacent account that derive from a fraudulent financial transaction originating from a fraudulent transaction account, described further herein. In some embodiments, as stated previously, the fraudulent transaction account is an account, such as, for example, a bank account or other financial account, of which a fraudulent transaction or fraudulent financial transaction originates. In some embodiments, a mule account is an account identified as such by mule-based fraud identification and prevention system 150 that is operating to perform fraudulent financial transactions at the behest of a fraudulent transaction account. For example, a mule account may be an account identified by mule-based fraud identification and prevention system 150 as receiving and forwarding proceeds of a fraudulent financial transaction originating from a fraudulent transaction account to other accounts identified as mule-adjacent accounts. In some embodiments, a mule-adjacent account is an account that is adjacent (via receipt of a direct or indirect financial transaction) to a mule account that has been identified as such by the mule-based fraud identification and prevention system 150. In some embodiments, the mule-based fraud identification and prevention system 150 includes a fraudulent identification receiving unit 220, a mule account identification assessment unit 230, a mule account indicator generation unit 240, and a mule-based fraud prevention unit 260. In some embodiments, a fraudulent identification receiving unit 220, the mule account identification assessment unit 230, the mule account indicator generation unit 240, and the mule-based fraud prevention unit 260 are collectively configured to identify and prevent mule-based fraud associated with the mule account and mule-adjacent accounts, as described further herein.

In some embodiments, in operation, fraudulent identification receiving unit 220 receives a fraudulent transaction indicator 211 from, for example, a fraudulent transaction identification entity associated with a fraudulent transaction account. In some embodiments, fraudulent transaction identification entity may be a payment network, an issuer, an acquirer, a merchant, or the like configured to identify an initial fraudulent transaction and provide a notification of the fraudulent transaction and related account information to mule-based fraud identification and prevention system 150. In some embodiments, fraudulent transaction indicator 211 is an electronic notification of a fraudulent transaction that is associated with a fraudulent transaction account. In some embodiments, the fraudulent transaction indicator 211 includes fraudulent payment account information, such as, for example, an account number of the fraudulent transaction account, a transaction time of a fraudulent transaction/s, and any other information required to perform mule-based fraud identification and prevention, as described herein.

In some embodiments, fraudulent identification receiving unit 220 is executable code configured to receive fraudulent transaction indicator 211 from, for example, a fraudulent transaction identification entity associated with a fraudulent financial transaction and generate a mule-account-assessment notification 221 that is provided to mule account identification assessment unit 230. In some embodiments, the mule-account-assessment notification 221 is an electronic notification that is configured to notify mule account identification assessment unit 230 to perform a mule account assessment of an account that has received a fraudulent transaction. In some embodiments, after receiving the fraudulent transaction indicator 211, fraudulent identification receiving unit 220 generates the mule-account-assessment notification 221 and provides the mule-account-assessment notification 221 to mule account identification assessment unit 230.

In some embodiments, mule account identification assessment unit 230 receives the mule-account-assessment notification 221 from fraudulent identification receiving unit 220. In some embodiments, mule account identification assessment unit 230 is executable code configured to perform a mule account assessment of an account that has received a fraudulent transaction originating from a fraudulent transaction account. In some embodiments, the mule account assessment is an assessment of financial transactions made by an account that received a fraudulent transaction from the fraudulent transaction account that is configured to determine whether the account that received the fraudulent transaction is a mule account and whether accounts adjacent to the account are mule-adjacent accounts. In some embodiments, mule account identification assessment unit 230 performs the mule account assessment by analyzing financial transactions originating from the account that received the fraudulent transaction to determine whether the financial transactions have been distributed according to mule-and-mule-adjacent-account criteria. In some embodiments, the mule-and-mule-adjacent criteria are criteria that, when met, indicate that an account that received a fraudulent transaction is a mule account and that an account (or accounts) that received financial transactions from an identified mule account is a mule-adjacent account. In some embodiments, the mule-and-mule-adjacent account criteria may include, for example, a distribution-amount-similarity threshold, a distribution-within-time-window threshold, a distribution-time-similarity threshold, a fund-time-send-out threshold, a transaction-record-disappearance threshold, a similar-country threshold, and a distributed-no-more-than-received threshold, described further herein.

In some embodiments, a distribution-amount-similarity threshold is a threshold that, when met as part of the mule account assessment, indicates that an account that has received a fraudulent financial transaction is a mule account when funds associated with the fraudulent financial transaction are distributed equally to a plurality of accounts adjacent to the account that has received the fraudulent financial transaction. For example, in some embodiments, when an account that has received a fraudulent financial transaction distributes the funds associated with the fraudulent financial transaction equally to a plurality of accounts, the distribution-amount-similarity threshold has been met and the account that has received the fraudulent financial transaction is identified a mule account and the plurality of accounts that received the equal amount of funds are identified as mule-adjacent accounts.

In some embodiments, a distribution-within-time-window threshold refers to a threshold that, when met as part of the mule account assessment, indicates that an account that has received a fraudulent financial transaction is a mule account when funds associated with the fraudulent financial transaction are distributed to a plurality of adjacent accounts by the account that has received the fraudulent financial transaction within a "time window". In some embodiments, a time window is a window of time or time interval utilized by mule-based fraud identification and prevention system 150 to perform a mule account assessment. In some embodiments, a time window may be, 1 hour, 2 hours, or some other amount of time utilized during a mule account assessment. For example, in some embodiments, when an account that has received a fraudulent financial transaction distributes the funds associated with the fraudulent financial transaction to a plurality of adjacent accounts within the time window, the distribution-within-time-window threshold has been met and the account that has received the fraudulent transaction is identified a mule account and the plurality of accounts that received the allocated funds from the mule account are identified as mule-adjacent accounts.

In some embodiments, a distribution-time-similarity threshold refers to a threshold that, when met as part of the mule account assessment, indicates that an account that has received a fraudulent financial transaction is a mule account when funds associated with the fraudulent financial transaction are distributed to a plurality of adjacent accounts by the account that has received the fraudulent financial transaction at an equivalent or approximately equivalent time. For example, in some embodiments, when an account that has received a fraudulent financial transaction distributes the funds associated with the fraudulent financial transaction to a plurality of adjacent accounts at the same time or approximately the same time, the distribution-time-similarity threshold has been met and the account that has received the fraudulent transaction is identified a mule account and the plurality of accounts that received the allocated funds from the mule account are identified as mule-adjacent accounts.

In some embodiments, a fund-time-send-out threshold refers to a threshold that, when met as part of the mule account assessment, indicates that an account that has received a fraudulent financial transaction is a mule account when funds associated with the fraudulent financial transaction are distributed to a plurality of adjacent accounts at or approximate to the time the funds were received by the account that has received the fraudulent financial transaction. For example, in some embodiments, when an account that has received a fraudulent financial transaction distributes the funds associated with the fraudulent financial transaction at the time the funds are received from the fraudulent transaction account, the fund-time-send-out threshold has been met and the account that has received the fraudulent transaction is identified a mule account and the plurality of accounts that received the allocated funds from the mule account are identified as mule-adjacent accounts.

In some embodiments, a transaction record disappearance threshold refers to a threshold that, when met as part of the mule account assessment, indicates that an account that has received a fraudulent transaction is a mule account when transaction records associated with the fraudulent transaction have been deleted or disappeared from the transaction record of the account that received the fraudulent transaction. For example, in some embodiments, when records of financial transactions (originating from the account that received a fraudulent financial transaction) distributed to a plurality of accounts have disappeared or have been deleted, the transaction record disappearance threshold has been met and the account that has received the fraudulent transaction is identified a mule account and the plurality of accounts associated with the financial transactions that have disappeared are identified as mule-adjacent accounts. Further, a transaction record disappearance threshold may include a disappearance of a financial transaction from the transaction record promptly after financial transactions have been identified as "suspicious transactions" by, for example, a payment network. In some embodiments, a suspicious transaction is a transaction that is deemed suspicious by, for example, a payment network in the payment transaction network due to account activity associated with the transaction or the account. In some embodiments, suspicious transactions may be assigned a mule-based risk score. In some embodiments, the mule-based risk score is a risk score that indicates a likelihood of a financial transaction being a mule-based fraudulent transaction. In some embodiments, the mule-based risk score may be utilized to train a mule-based predictive model, the mule-based predictive model being utilized in a fraud reporting system to identify mule-associated fraudulent activity.

In some embodiments, a transaction record disappearance may also occur when, for example, a last occurrence of a transaction in a dataset of transactions is greater than or equal to n, where n is a number of months utilized to dictate a limit for a transaction record disappearance identification. For example, for n equal to two, when a last occurrence of a transaction is greater than two months, then a transaction record disappearance has occurred. In some embodiments, a transaction record disappearance may occur when, for example, a number of transactions from an n month to n plus m months is zero, where n is a number representing an initial month and m is a number representing a subsequent month. For example, when the number of transactions from a second month to a fourth month is equal to zero, then a transaction record disappearance has occurred.

In some embodiments, a similar-high-risk-country threshold refers to a threshold that, when met as part of the mule account assessment, indicates that an account that has received a fraudulent financial transaction is a mule account when funds associated with the fraudulent financial transaction are distributed to a plurality of accounts located in a country identified as a high risk for fraudulent transaction activity. For example, in some embodiments, when an account that has received a fraudulent financial transaction distributes the funds associated with the fraudulent financial transaction to a plurality of accounts in a third-world country identified as a high risk for fraudulent financial transaction activity, the similar-high-risk-country threshold has been met and the account that has received the fraudulent financial transaction is identified a mule account and the plurality of accounts that received the allocated funds from the mule account are identified as mule-adjacent accounts.

In some embodiments, a distributed-no-more-than-received threshold refers to a threshold that, when met as part of the mule account assessment, indicates that an account that has received a fraudulent financial transaction is a mule account when the exact amount of funds associated with the fraudulent financial transaction are distributed to a plurality of accounts by the account that has received the fraudulent financial transaction. For example, in some embodiments, when an account that has received a fraudulent financial transaction distributes all the funds associated with the fraudulent financial transaction to a plurality of accounts (e.g., the exact amount of funds received in the fraudulent financial transaction), the distributed-no-more-than-received threshold has been met and the account that has received the fraudulent financial transaction is identified a mule account and the plurality of accounts that received the equal funds are identified as mule-adjacent accounts.

Examples of formulas that may be utilized during a mule account assessment are further illustrated herein. For example, in some embodiments, for a distribution-within-time-window threshold (e.g., for an account that transmits funds received from the fraudulent transaction account, less a fee for the example illustrated, in a time window (e.g., short time window), the following formula may be utilized:

$$ftp - fee < Snt_{\pm Int} / (Snt_{\pm Int} + Rcd_{\pm Int}) <= ftp$$

where Int is a time window or interval relative to current transaction (e.g., 1 hr for the example illustrated), ftp is a fund-time-send-out threshold parameter, $Snt_{Int}$ is a total amount sent by account in an interval Int, $Rcd_{Int}$ is a total amount received by account in an Int, and fee is a fee charged (e.g., by a bank or payment network) for the payment transaction. In another example, in some embodiments, for a distributed-no-more-than-received threshold (e.g., where up to a current transaction, the account that received the fraudulent financial transaction has distributed no more of the funds than the funds received within an hour for the example illustrated), the following formula may be utilized:

$$Snt_{-Int} + Amt <= Rcd_{-Int},$$

where, as stated previously, Int is a time window or interval relative to current transaction (e.g., 1 hr for the example illustrated), $Snt_{Int}$ is a total amount sent by account in an interval Int, $Rcd_{Int}$ is a total amount received by account in an Int, and Amt is an amount of the current transaction.

In some embodiments, after performing the mule account assessment, mule account identification assessment unit 230 generates a mule account assessment result 231. In some embodiments, mule account assessment result 231 is an enumerated result of the mule account assessment performed by mule account identification assessment unit 230. In some embodiment, mule account assessment result 321 includes mule account and mule-adjacent account information that serves as an indication of the results of the mule account assessment. For example, mule account assessment result may provide an enumerated list of the accounts and associated account information of the accounts that have been identified as a mule account and mule-adjacent accounts. In some embodiments, after generating the mule account assessment result, mule account identification assessment unit 230 provides mule account assessment result 231 to mule account indicator generation unit 240.

In some embodiments, mule account indicator generation unit 240 receives the mule account assessment result 231. In some embodiments, mule account indicator generation unit 240 is executable code configured to generate a mule account indicator 241 that is utilized to tag (for identification purposes) accounts that have been designated as mule accounts and mule-adjacent accounts. In some embodiments, mule account indicator 241 is an alphanumeric indicator generated by mule account indicator generation unit 240 that is configured to serve as an indication that an account is a mule account and/or a mule adjacent account/s that is associated with a fraudulent financial transaction. In some embodiments, the mule account indicator 241 may be embedded into subsequent financial transaction information associated with the mule account and/or a mule adjacent account/s, such as, for example, a transaction message or a financial transaction message, associated with the fraudulent transaction. In some embodiments, after generating the mule account indicator 241, mule account indicator generation unit 240 provides the mule account indicator 241 to mule-based fraud prevention unit 260.

In some embodiments, mule-based fraud prevention unit 260 receives the mule account indicator 241 from mule account indicator generation unit 240 of mule-based fraud identification and prevention system 150. In some embodiments, mule-based fraud prevention unit 260 is executable code configured to prevent mule-based financial transactions identified by mule-based fraud identification and prevention system 150 from being executed. In some embodiments, mule-based fraud prevention unit 260 prevents mule-based financial transactions from being executed by identifying mule-adjacent financial transactions associated with the financial transactions that were utilized to identify an account as a mule account and adjacent accounts as a mule-adjacent account (tagged with mule account indicator 241) and stopping the mule-adjacent financial transactions from occurring. In some embodiments, after the mule-adjacent financial transactions have been prevented by mule-based fraud prevention unit 260, mule-based fraud identification and prevention system 150 may close mule-adjacent accounts or proceed to monitor the mule-adjacent accounts for law enforcement and the like.

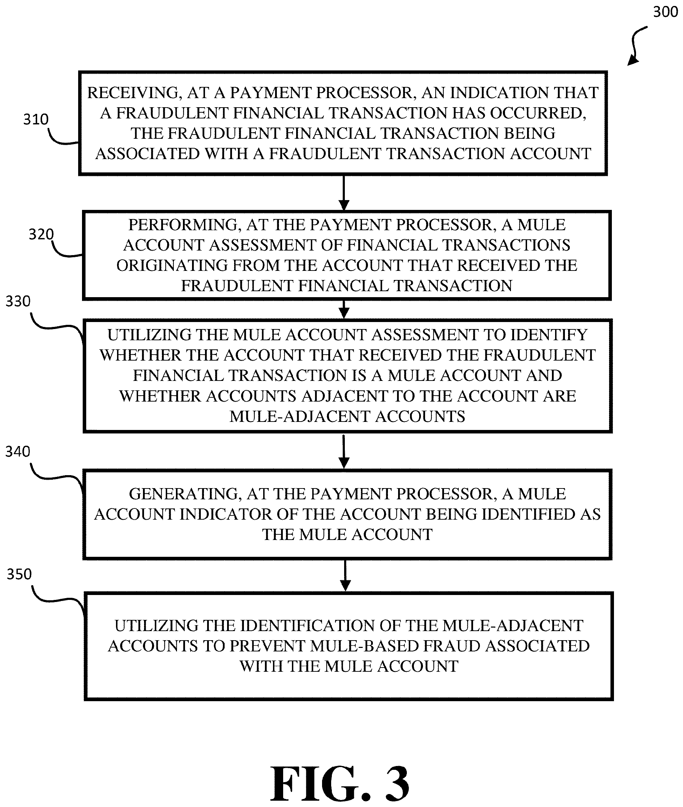

FIG. 3 illustrates a mule-based fraud identification and prevention method 300 in accordance with some embodiments. In some embodiments, the mule-based fraud identification and prevention method 300 is configured to identify and prevent mule-based fraud associated with a mule identified by mule-based fraud identification and prevention system 150. In some embodiments, the mule-based fraud identification and prevention method 300 is executed by mule-based fraud identification and prevention system 150. The method, process steps, or stages illustrated in FIG. 3 may be implemented as an independent routine or process, or as part of a larger routine or process. Note that each process step or stage depicted may be implemented as an apparatus that includes a processor executing a set of instructions, a method, or a system, among other embodiments. In some embodiments, mule-based fraud identification and prevention method 300 is described with reference to FIG. 1 - FIG. 5.

In some embodiments, at operation 310, fraudulent identification receiving unit 220 receives an indication that a fraudulent financial transaction has occurred. In some embodiments, as stated previously, the indication may be in the form of, for example, a fraudulent transaction indicator 211 that is configured to indicate that a fraudulent financial transaction associated with a fraudulent transaction account, such as, for example, a bank account or other type of account associated with the fraudulent financial transaction has occurred. In some embodiments, operation 310 proceeds to operation 320.

In some embodiments, at operation 320, mule account identification assessment unit 230 performs a mule account assessment of financial transactions originating from the account that received the fraudulent financial transaction. In some embodiments, operation 320 proceeds to operation 330. In some embodiments, at operation 330, mule account identification assessment unit 230 utilizes the mule account assessment to identify whether the account that received the fraudulent financial transaction is a mule account and whether accounts adjacent to the account that received the fraudulent transaction are mule-adjacent accounts. In some embodiments, operation 330 proceeds to operation 340.

In some embodiments, at operation 340, mule account indicator generation unit 240 generates mule account indicator 241. In some embodiments, as stated previously, mule account indicator 241 is an alphanumeric indicator that is configured to serve as an indication that an account is a mule account and/or a mule adjacent account that is associated with a fraudulent financial transaction. In some embodiments, operation 340 proceeds to operation 350. In some embodiments, at operation 350, mule fraud prevention unit 250 utilizes the identification of the mule account and mule-adjacent accounts to prevent mule-based fraud associated with the mule account and mule-adjacent accounts, as described previously herein.

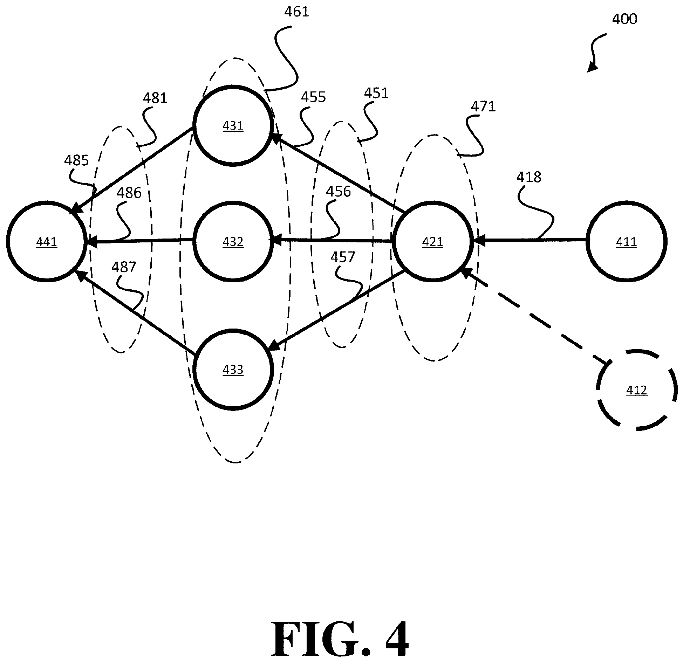

FIG. 4 illustrates a block diagram of a mule identification transaction graph 400 in accordance with some embodiments. In some embodiments, the mule identification transaction graph 400 is a transaction graph that may be utilized by mule-based fraud identification and prevention system 150 during the identification of a mule (e.g., mule account 471) and mule-adjacent accounts (e.g., mule-adjacent accounts 461) associated with a fraudulent transaction (e.g., fraudulent financial transaction 418). In some embodiments, mule identification transaction graph 400 includes a graphical representation of a fraudulent transaction account 411, an account 412, an account 421, an account 431, an account 432, an account 433, an account 441, a fraudulent financial transaction 418, identified mule-adjacent accounts 461, identified mule-based fraudulent financial transactions 451, and mule-adjacent fraudulent financial transactions 481. In some embodiments, utilizing mule-based fraud identification and prevention method 300, mule-based fraud identification and prevention system 150 has identified account 421 as mule account 471, accounts 431- 434 as mule-adjacent accounts 461, financial transactions 485 - 487 as mule-adjacent fraudulent financial transactions 481, account 441 as a cash cow account (e.g., an endpoint account of the mule-adjacent fraudulent financial transactions 481) and financial transactions 455 - 457 as mule fraudulent financial transactions. Mule-adjacent fraudulent financial transactions 481 are prevented from occurring as mule-based fraud identification and prevention system 150 has identified the financial transactions 455 - 457 as mule fraudulent financial transactions 451, of which mule-adjacent fraudulent financial transactions 481 are based, as described previously herein.

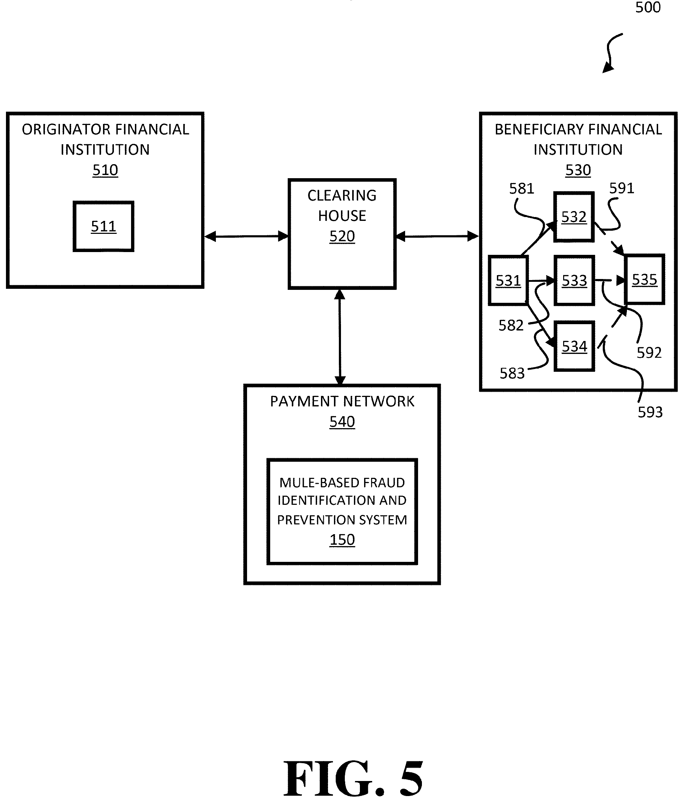

FIG. 5 illustrates an account-to-account (A2A) payment transaction network 500 that includes mule-based fraud identification and prevention system 150 in accordance with some embodiments. In some embodiments, the A2A payment transaction network 500 is configured to utilize mule-based fraud identification and prevention system 150, described previously herein, to identify a mule account and mule-adjacent accounts and prevent mule-based fraud associated with the mule account, e.g., mule-adjacent fraudulent financial transactions. In some embodiments, A2A payment transaction network 500 includes originator financial institution 510, clearing house 520, beneficiary financial institution 530, and payment network 540. In some embodiments, originator financial institution includes account 511 and beneficiary financial institution 530 includes accounts 531 - 535. In the example provided, clearing house 520 has notified payment network 540 (e.g., via a fraudulent transaction indicator) of a fraudulent financial transaction originating from account 511 at originator financial institution 511 to account 531 of beneficiary financial institution 530. In some embodiments, after having received the fraudulent transaction indicator, payment network 540 utilized mule-based fraud identification and prevention system 150 to analyze financial transactions 581-583 to identify account 532 as a mule account and accounts 532 - 533 as mule-adjacent accounts and prevent financial transactions 591 -593 as mule-adjacent fraudulent financial transactions from occurring, as described previously herein.

In some embodiments, the mule-based fraud identification and prevention system 150 described herein improves payment network security by utilizing a mule account assessment to analyze fraudulent mule-based transaction patterns in real-time using mule-based fraud identification and prevention system 150. Unlike other payment network systems, mule-based fraud identification and prevention system 150 recognizes mule-based fraudulent behavior and generates, for example, mule-based risk scores that enable more accurate fraud detection. In some embodiments, integrated within a payment network's authorization process, the mule-based fraud identification and prevention system 150 reduces the amount of hardware required to prevent mule-based fraudulent transactions compared to other payment networks, thereby limiting transaction disruption and maintaining low latency and secure data exchange, which provides a practical and efficient solution to prevent fraudulent transactions.

In some embodiments, system 100 may be utilized in one or more networks of a plurality of networks or payment platforms. In some embodiments, for example, system 100 may be utilized for financial transactions, combined or otherwise, in peer-to-peer (P2P) payment platforms, such as, Zelle® or Venmo® or in an ACH clearing house to, for example, block financial transactions from a P2P payment platform to a mule.

In some embodiments, system 100 may not receive a fraudulent account indicator 211 as an indication of a fraudulent financial transaction and instead may perform a no-fraudulent-account-indicator-received-distribution-amount-similarity analysis to indicate whether a financial transaction is a fraudulent financial transaction. In some embodiments, the no-fraudulent-account-indicator-received-distribution-amount-similarity analysis may be performed on transactions during various time periods. In some embodiments, the no-fraudulent-account-indicator-received-distribution-amount-similarity analysis is an analysis of financial transactions utilized to identify a high-risk behavior in the financial transactions that are indicative of fraudulent financial transactions. In some embodiments, no-fraudulent-account-indicator-received-distribution-amount-similarity analysis utilizes no-fraudulent-account-indicator quantities calculated as part of the no-fraudulent-account-indicator-received-distribution-amount-similarity analysis to determine a likelihood that an account is a mule account and to determine financial transaction prevention actions to prevent the associated financial transactions from occurring. In some embodiments, adjacency may be associated with such accounts and a risk assessment may be utilized to identify risk utilizing the adjacency. In some embodiments, in assessing a risk of a transaction, system 100 may include factors, such as, for example, a frequency at which transactions occur from an account, an entity identification, a distribution-amount-similarity, and/or a transaction record disappearance.

In some embodiments, the no-fraudulent-account-indicator-received-distribution-amount-similarity analysis may incorporate whether an account has ceased conducting transactions over a period following a possible fraudulent transaction. For example, in some embodiments, financial transactions may be identified as fraudulent when the financial transactions cease to appear in a transaction record between, for example, a time x and a time x plus a time y (e.g., days or months) after a financial transaction and are directed to adjacent accounts. In some embodiments, the adjacent accounts may then be identified as mule adjacent accounts.

In some embodiments, in utilizing mule-based fraud identification system 150, instead of a financial transaction being rejected, an ACH or financial institution may provide a sender of the financial transaction with a warning notification and an option to abort the transaction, demand additional verification from a sender, (e.g., answering a predefined question, performing two-factor identification, or providing a sender biometric, or contacting a financial institution associated with the financial transaction), or execute another risk mitigating action.

In some embodiments, mule account identification may be combined with other features in determining whether an account is a mule account or a mule adjacent account.

In some embodiments, the no-fraudulent-account-indicator-received-distribution-amount-similarity analysis may be applied on an account irrespective of whether the account has been flagged as not being a fraudulent account or identified as such in association with a mule account adjacency analysis.

In some embodiments, a computer-implemented method includes receiving, at a payment processor, an indication that a fraudulent transaction has occurred, the fraudulent transaction being associated with a fraudulent transaction account; performing, at the payment processor, a mule account assessment of financial transactions originating from an account that received the fraudulent transaction; utilizing the mule account assessment to identify whether the account that received the fraudulent transaction is a mule account; generating, at the payment processor, a mule account indicator indicative of the account that received the fraudulent transaction being identified as the mule account; and utilizing the mule account assessment to identify mule-adjacent accounts associated with the mule account, the identification of the mule-adjacent accounts being utilized to prevent mule-based fraud associated with the mule account.

In some embodiments of the computer-implemented method, the mule account assessment is configured to perform a distribution-amount-similarity analysis of the financial transactions originating from the account and associated with the fraudulent transaction linked to the account.

In some embodiments of the computer-implemented method, when the distribution-amount-similarity analysis yields that a partition of funds associated with the financial transactions are approximately equivalent amongst a plurality of accounts associated with the account, the account is identified as the mule account.

In some embodiments of the computer-implemented method, when the distribution-amount-similarity analysis yields that the partition of funds associated with the financial transactions are approximately equivalent amongst a plurality of accounts associated with the account, each account of the plurality of accounts are deemed mule-adjacent accounts.

In some embodiments of the computer-implemented method, the mule account is flagged as the mule account utilizing the mule account indicator.

In some embodiments of the computer-implemented method, the mule account indicator is an alphanumeric character configured to indicate a mule account status.

In some embodiments of the computer-implemented method, the funds associated with the mule-adjacent accounts are frozen to prevent further fraudulent activity.

In some embodiments of the computer-implemented method, a transaction graph indicative of the financial transactions originating from the account is utilized during the mule account assessment.

In some embodiments of the computer-implemented method, a mule-based risk score associated with each financial transaction of the financial transactions originating from the account identifies a likelihood of the financial transaction being a mule-based fraudulent transaction.

In some embodiments, a system includes a processor; and a non-transitory computer readable medium coupled to the processor, the non-transitory computer readable medium including code that: receives an indication that a fraudulent transaction has occurred, the fraudulent transaction being associated with an account; performs a mule-indication assessment of financial transactions associated with the account; utilizes the mule-indication assessment to identify whether the account is a mule account; generates a mule account indicator indicative of the account being identified as the mule account; and utilizes the mule account indicator and the mule-indication assessment to identify mule-adjacent accounts associated with the mule account, the identification of the mule-adjacent accounts being utilized to prevent mule-based fraud associated with the mule account.

In some embodiments of the system, the mule-indication assessment is configured to perform a distribution-amount-similarity analysis of the financial transactions originating from the account and associated with the fraudulent transaction linked to the account.

In some embodiments of the system, when the distribution-amount-similarity analysis yields that a partition of funds associated with the financial transactions are approximately equivalent amongst a plurality of accounts associated with the account, the account is identified as the mule account.

In some embodiments of the system, when the distribution-amount-similarity analysis yields that the partition of funds associated with the financial transactions are approximately equivalent amongst a plurality of accounts associated with the account, each account of the plurality of accounts are deemed mule-adjacent accounts.

In some embodiments of the system, the mule account is flagged as the mule account utilizing the mule account indicator.

In some embodiments of the system, the mule account indicator is an alphanumeric character configured to indicate a mule account status.

In some embodiments of the system, the funds associated with the mule-adjacent accounts are frozen to prevent further fraudulent activity.

In some embodiments of the system, a transaction graph indicative of the financial transactions originating from the account is utilized during the mule-indication assessment,

In some embodiments of the system, a mule-based risk score associated with each financial transaction of the financial transactions originating from the account identifies a likelihood of the financial transaction being a mule-associated fraudulent transaction.

In some embodiments, a computer-implemented method includes receiving, at a payment processor, an indication that a fraudulent transaction has occurred, the fraudulent transaction being associated with an account; generating, at the payment processor, a transaction graph indicative of financial transactions associated with the account; performing, at the payment processor, a mule account assessment of the financial transactions indicated by the transaction graph; generating, at the payment processor, a mule-based risk score associated with each financial transaction, each mule-based risk score identifying the likelihood of the financial transaction being a fraudulent transaction; and utilizing the mule-based risk score to train a mule-based predictive model, the mule-based predictive model being utilized in a fraud reporting system to identify mule-associated fraudulent activity.

In some embodiments of the computer-implemented method, the mule-based risk score is associated with each financial transaction of financial transactions originating from the account identifies a likelihood of the financial transaction being the mule-associated fraudulent activity.

## Claims

1.  A computer-implemented method (300), comprising:

    receiving (310), at a payment processor, an indication that a fraudulent transaction has occurred, the fraudulent transaction being associated with a fraudulent transaction account;
    performing (320), at the payment processor, a mule account assessment of financial transactions originating from an account that received the fraudulent transaction;
    utilizing the mule account assessment to identify (330) whether the account that received the fraudulent transaction is a mule account;
    generating (340), at the payment processor, a mule account indicator indicative of the account that received the fraudulent transaction being identified as the mule account; and
    utilizing the mule account assessment to identify (350) mule-adjacent accounts associated with the mule account, the identification of the mule-adjacent accounts being utilized to prevent mule-based fraud associated with the mule account.

2.  The computer-implemented method of claim 1, wherein:

the mule account assessment is configured to perform a distribution-amount-similarity analysis of the financial transactions originating from the account that received the fraudulent transaction and associated with the fraudulent transaction linked to the account.

3. The computer-implemented method of claim 2, wherein:

when the distribution-amount-similarity analysis yields that a partition of funds associated with the financial transactions are approximately equivalent amongst a plurality of accounts associated with the account that received the fraudulent transaction, the account that received the fraudulent transaction is identified as the mule account.

4. The computer-implemented method of claim 3, wherein:

when the distribution-amount-similarity analysis yields that the partition of funds associated with the financial transactions are approximately equivalent amongst a plurality of accounts associated with the account that received the fraudulent transaction, each account of the plurality of accounts are deemed mule-adjacent accounts.

5. The computer-implemented method of claim 4, wherein:

the funds associated with the mule-adjacent accounts are frozen to prevent further fraudulent activity.

6. The computer-implemented method of either claim 3 or claim 4, wherein:

the mule account is flagged as the mule account utilizing the mule account indicator.

7. The computer-implemented method of claim 5, wherein:

the mule account indicator is an alphanumeric character configured to indicate a mule account status.

8. The computer-implemented method of any of claims 1 to 7, wherein:

a transaction graph indicative of the financial transactions originating from the account that received the fraudulent transaction is utilized during the mule account assessment.

9. The computer-implemented method of any of claims 1 to 8, wherein:

a mule-based risk score associated with each financial transaction of the financial transactions originating from the account that received the fraudulent transaction identifies a likelihood of the financial transaction being a mule-based fraudulent transaction.

10. A system (100), comprising:

a processor (102); and
a non-transitory computer readable medium (105) coupled to the processor (102), the non-transitory computer readable medium (105) including code that, when executed by the processor (102), performs the method of any of claims 1 to 9.

11. A computer-readable medium (105) including program instructions that, when executed by at least one processor (102), cause the at least one processor to perform the method according to any one of claims 1 to 9.

SYSTEM
100

I/O INTERFACE
101

PROCESSORS
102

NETWORK
INTERFACE
103

STORAGE INTERFACE
104

MEMORY
105

OS
107

REPOSITORY
130

PROCESSES
120

MULE-BASED FRAUD
IDENTIFICATION AND
PREVENTION SYSTEM
150

# FIG. 1

MULE-BASED FRAUD IDENTIFICATION AND PREVENTION SYSTEM
150

FRAUDULENT
TRANSACTION
INDICATOR
211

FRAUDULENT
IDENTIFICATION
RECEIVING UNIT
220

MULE
ACCOUNT-
ASSESSMENT
NOTIFICATION
221

MULE ACCOUNT IDENTIFICATION
ASSESSMENT UNIT
230

MULE ACCOUNT
ASSESSMENT
RESULT
231

MULE ACCOUNT INDICATOR
GENERATION UNIT
240

MULE ACCOUNT INDICATOR
241

MULE-BASED FRAUD PREVENTION
UNIT
260

# FIG. 2

300

310 RECEIVING, AT A PAYMENT PROCESSOR, AN INDICATION THAT A FRAUDULENT FINANCIAL TRANSACTION HAS OCCURRED, THE FRAUDULENT FINANCIAL TRANSACTION BEING ASSOCIATED WITH A FRAUDULENT TRANSACTION ACCOUNT

320 PERFORMING, AT THE PAYMENT PROCESSOR, A MULE ACCOUNT ASSESSMENT OF FINANCIAL TRANSACTIONS ORIGINATING FROM THE ACCOUNT THAT RECEIVED THE FRAUDULENT FINANCIAL TRANSACTION

330 UTILIZING THE MULE ACCOUNT ASSESSMENT TO IDENTIFY WHETHER THE ACCOUNT THAT RECEIVED THE FRAUDULENT FINANCIAL TRANSACTION IS A MULE ACCOUNT AND WHETHER ACCOUNTS ADJACENT TO THE ACCOUNT ARE MULE-ADJACENT ACCOUNTS

340 GENERATING, AT THE PAYMENT PROCESSOR, A MULE ACCOUNT INDICATOR OF THE ACCOUNT BEING IDENTIFIED AS THE MULE ACCOUNT

350 UTILIZING THE IDENTIFICATION OF THE MULE-ADJACENT ACCOUNTS TO PREVENT MULE-BASED FRAUD ASSOCIATED WITH THE MULE ACCOUNT

# FIG. 3

**FIG. 4**

500

ORIGINATOR FINANCIAL
INSTITUTION
510

511

CLEARING
HOUSE
520

BENEFICIARY FINANCIAL
INSTITUTION
530

581    532    591

531    533    535

582    534

583    592

593

PAYMENT NETWORK
540

MULE-BASED FRAUD
IDENTIFICATION AND
PREVENTION SYSTEM
150

# FIG. 5

Europäisches
Patentamt

European
Patent Office

Office européen
des brevets

# EUROPEAN SEARCH REPORT

**Application Number**

EP 26 15 3612

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2021/009743 A1 (BIOCATCH LTD [IL]) 21 January 2021 (2021-01-21) * the whole document * ----- | 1-11 | INV. G06Q20/40 |
| Y | US 2020/273040 A1 (NOVICK ITAI [IL] ET AL) 27 August 2020 (2020-08-27) * the whole document * ----- | 1-11 | |

**TECHNICAL FIELDS SEARCHED (IPC)**

G06Q

The present search report has been drawn up for all claims

| Place of search | Date of completion of the search | Examiner |
|---|---|---|
| The Hague | 15 June 2026 | Sigolo, Alessandro |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 26 15 3612

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2026

| Patent document cited in search report | Publication date | Patent family member(s) | Publication date |
|---|---|---|---|
| WO 2021009743 A1 | 21-01-2021 | NONE | |
| US 2020273040 A1 | 27-08-2020 | US 2020273040 A1 | 27-08-2020 |
| | | US 2022108319 A1 | 07-04-2022 |
| | | US 2023153820 A1 | 18-05-2023 |
| | | US 2024013225 A1 | 11-01-2024 |

EPO FORM P0459

For more details about this annex : see Official Journal of the European Patent Office, No. 12/82